# EUROPÄISCHE PATENTSCHRIFT

(11) **EP 2 502 827 B1**
(45) Veröffentlichungstag und Bekanntmachung des Hinweises auf die Patenterteilung: **25.09.2013**
(21) Anmeldenummer: 12001760.3
(22) Anmeldetag: 15.03.2012
(51) Int. Cl.: B64D 11/06

(54) **Sitzvorrichtung, insbesondere Fluggastsitzvorrichtung**
seat device, in particular aircraft passenger seat device
Siège, notamment siège d'avion pour passager

(30) Priorität: 23.03.2011 DE 102011014723
(43) Veröffentlichungstag der Anmeldung: 26.09.2012
(73) Patentinhaber: Recaro Aircraft Seating GmbH & Co. KG, 74523 Schwäbisch Hall (DE)
(72) Erfinder: Philipp, Adrian, 74538 Rosengarten-Westheim (DE)
(74) Vertreter: Daub, Thomas

(56) Entgegenhaltungen:
- EP-A1- 2 279 897
- FR-A1- 2 821 252
- US-A1- 2008 007 101

## Beschreibung

### Stand der Technik

Die Erfindung geht aus von einer Sitzvorrichtung, insbesondere einer Fluggastsitzvorrichtung, mit zumindest einer Kontrolleinheit, die zur Bewegung eines Sitzteils in einem Arbeitsraum durch Ansteuerung zumindest eines Sitzaktuators in einem Arbeitsraum vorgesehen ist.

Aus der FR 2 821 252 A1 ist bereits eine Sitzvorrichtung, insbesondere eine Fluggastsitzvorrichtung, mit zumindest einer Kontrolleinheit, die zur Bewegung eines Sitzteils in einem Arbeitsraum durch Ansteuerung zumindest eines Sitzaktuators in einem Arbeitsraum vorgesehen ist, bekannt. Der Arbeitsraum ist durch eine Hüllkurve begrenzt und beschreibt einen Raum, in dem sich der Sitzaktuator bewegt.

### Aufgabe der Erfindung

Der Erfindung liegt insbesondere die Aufgabe zugrunde, eine gattungsgemäße Sitzvorrichtung bereitzustellen, durch die ein Passagierkomfort vor allem bei einer Sitzverstellung erhöht werden kann.

Diese Aufgabe ist durch eine Sitzvorrichtung gemäß dem Patentanspruch 1 gelöst. Weitere vorteilhafte Ausführungen der Erfindung können den Unteransprüchen entnommen werden.

### Vorteile der Erfindung

Die Erfindung geht aus von einer Sitzvorrichtung, insbesondere einer Fluggastsitzvorrichtung, mit zumindest einer Kontrolleinheit, die zur Bewegung eines Sitzteils in einem Arbeitsraum durch Ansteuerung zumindest eines Sitzaktuators in einem Arbeitsraum vorgesehen ist.

Es wird vorgeschlagen, dass in der Kontrolleinheit diskrete Raumpunkte gespeichert sind, die den Arbeitsraum vollständig definieren, in dem sich ein über das Sitzteil mit dem Sitzaktuator verbundener Arbeitspunkt befindet, so dass der Arbeitspunkt zu einem nächstliegenden Raumpunkt stets einen Abstand aufweist, der kleiner ist als ein definierter Maximalabstand, und wobei dieser Maximalabstand kleiner als ein Abstand des Raumpunkts zu einem nächstliegenden, benachbarten Raumpunkt ist. Hierdurch kann die Kontrolleinheit eine mögliche Sitzaktuatoransteuerung besonders schnell berechnen. Zudem kann eine Bewegung des Sitzaktuators vorteilhaft einfach entlang der Raumpunkte erfolgen. Kollisionen des Sitzaktuators können somit schnell vorausberechnet und vermieden werden, was zu einem erhöhten Sitzkomfort führen kann. Weiterhin kann der Arbeitsraum besonders einfach durch die Raumpunkte definiert werden. Unter einer "Kontrolleinheit" soll dabei in diesem Zusammenhang insbesondere eine Einheit verstanden werden, die eine Datenspeichereinheit und eine Recheneinheit aufweist und dazu vorgesehen ist, zumindest einen Sitzaktuator anzusteuern. Unter einer "Datenspeichereinheit" soll insbesondere eine Einheit verstanden werden, die dazu vorgesehen ist, zumindest eine Information, vorteilhaft von einer Stromversorgung unabhängig, zu speichern. Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, Ein- und Ausgabemittel, weitere elektrische Bauteile, ein Betriebsprogramm, Regelroutinen, Steuerroutinen und/oder Berechnungsroutinen auf. Vorzugsweise sind die Bauteile der Recheneinheit auf einer gemeinsamen Platine angeordnet und/oder vorteilhaft in einem gemeinsamen Gehäuse angeordnet. Unter einem "Sitzaktuator" soll in diesem Zusammenhang insbesondere ein Antriebselement verstanden werden, das dazu vorgesehen ist, zumindest ein Sitzteil relativ zu einem weiteren Sitzteil und/oder zu einer Sitzumgebung zu bewegen. Das Antriebselement kann dabei insbesondere elektrisch und/oder pneumatisch arbeiten und dabei eine Linearbewegung und/oder eine Rotationsbewegung ausführen. Unter einem "Arbeitsraum" soll in diesem Zusammenhang ein definierter Raum verstanden werden, in dem bestimmte Sitzteile bewegt werden können. Der Arbeitsraum kann statisch oder bevorzugt zumindest teilweise veränderbar ausgebildet sein. Unter "diskreten Raumpunkten" soll in diesem Zusammenhang insbesondere eine definierte Anzahl an Referenzpunkten verstanden werden, die bevorzugt an unterschiedlichen Orten angeordnet sind. Bevorzugt ist für zumindest einen Raumpunkt ein Geschwindigkeitsparameter gespeichert, der festlegt, mit welcher Geschwindigkeit ein Sitzteil den Raumpunkt passieren soll. Unter einem Maximalabstand soll in diesem Zusammenhang insbesondere ein Abstand verstanden werden, der einen Toleranzbereich um einen Raumpunkt definiert. Erfindungsgemäß ist der Maximalabstand zu einem Raumpunkt kleiner als der Abstand des Raumpunkts zu einem nächstliegenden, benachbarten Raumpunkt. Bevorzugt ist für zumindest einen Raumpunkt ein individueller Maximalabstand gespeichert.

In einer weiteren Ausgestaltung der Erfindung wird vorgeschlagen, dass die Kontrolleinheit dazu vorgesehen ist, einen Arbeitspunkt des zumindest einen Sitzaktuators zu berechnen, wodurch eine besonders einfache und präzise Positionsbestimmung des Sitzaktuators erreicht werden kann. Unter "vorgesehen" soll insbesondere speziell programmiert, ausgelegt und/oder ausgestattet verstanden werden.

Ist die Kontrolleinheit dazu vorgesehen, zumindest eine Betriebsposition des zumindest einen Sitzaktuators zu speichern, kann ein Sitzaktuator vorteilhaft besonders schnell in eine gewünschte Stellung gefahren werden und/oder der Sitzkomfort weiter erhöht werden. Unter einer "Betriebsposition" soll in diesem Zusammenhang insbesondere eine vordefinierte Sitzposition verstanden werden, die insbesondere bei einem Start- oder Landevorgang, bei Turbulenzen, zum Ausruhen, zum Essen oder zum Lesen angesteuert werden kann.

Ferner wird vorgeschlagen, dass die Kontrolleinheit dazu vorgesehen ist, bei einer Ansteuerung des zumindest einen Sitzaktuators einen Verfahrweg zu berechnen, wodurch der Verfahrweg bei jeder Ansteuerung spezifisch festgelegt und/oder ein flüssiger, weicher Verfahrweg erreicht werden kann. Unter einem "Verfahrweg" soll dabei in diesem Zusammenhang insbesondere eine Fahrkurve verstanden werden, auf der sich ein fester Bezugspunkt des Sitzaktuators bei einer Ansteuerung des Sitzaktuators bewegt. Vorteilhaft weist der Verfahrweg keine Knicke oder Ecken auf.

Es wird weiter vorgeschlagen, dass die Kontrolleinheit dazu vorgesehen ist, den Verfahrweg in Abhängigkeit von zumindest einer Abstandsbestimmung zu zumindest einem nächstliegenden Raumpunkt zu berechnen. Dadurch kann der Verfahrweg auf einfache Weise an den Arbeitsraum angepasst und/oder ein Verlassen des zumindest einen Sitzaktuators aus dem Arbeitsraum vorteilhaft vermieden werden.

In einer weiteren Ausgestaltung der Erfindung wird vorgeschlagen, dass die Kontrolleinheit dazu vorgesehen ist, den Verfahrweg in einer.Vorsimulation zu berechnen. Eine mögliche Kollision des zumindest einen Sitzaktuators mit einem weiteren Bauteil und/oder ein Verlassen des Arbeitsraums kann dadurch vorteilhaft frühzeitig erkannt und vermieden werden. Ferner kann durch die Vorsimulation eine Ausgleichsbewegung des zumindest einen Sitzaktuators erreicht werden, was zu einem erhöhten Sitzkomfort führen und/oder ein abruptes Stoppen der Sitzaktuatoren vermeiden kann.

Der Sitzkomfort kann weiter gesteigert werden, wenn die Kontrolleinheit dazu vorgesehen ist, den zumindest einen Sitzaktuator bei einer Gesamtbewegung zeitsynchron mit zumindest einem weiteren Sitzaktuator anzusteuern. Dadurch können ein Anfahren und ein Abbremsen aller Sitzaktuatoren gleichzeitig erfolgen, was zu einem erhöhten Sitzkomfort führen kann. Unter "zeitsynchron" soll in diesem Zusammenhang zeitgleich verstanden werden.

In einer weiteren Ausgestaltung der Erfindung wird vorgeschlagen, dass die Kontrolleinheit dazu vorgesehen ist, für den zumindest einen Sitzaktuator eine Verfahrkurve zu berechnen. Dadurch kann jeder Sitzaktuator vorteilhaft mit einem eigenen Geschwindigkeitsverlauf angesteuert werden. Unter einer "Verfahrkurve" soll in diesem Zusammenhang insbesondere ein Datensatz verstanden werden, der Geschwindigkeitsverläufe und/oder Beschleunigungsverläufe von Sitzaktuatoren beschreibt. Bevorzugt berechnet die Kontrolleinheit die Verfahrkurve insbesondere aus den Raumpunkten, dem Verfahrweg, den Geschwindigkeitsparametern der Raumpunkte und/oder den individuellen Maximalabständen der Raumpunkte.

Weist die Kontrolleinheit eine Sensoreinheit auf, die dazu vorgesehen ist, den Verfahrweg zu verändern, können Gegenstände oder Hindernisse innerhalb des Arbeitsraums erkannt und der Arbeitsraum verändert werden, was Kollisionen von Sitzteilen vermeiden kann.

### Zeichnung

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen schematisch:
- Fig. 1: einen Aufbau einer Sitzvorrichtung,
- Fig. 2: eine Seitenansicht eines Fluggastsitzes mit der Sitzvorrichtung nach Figur 1,
- Fig. 3: eine Seitenansicht des Fluggastsitzes mit der Sitzvorrichtung nach Figur 2 mit einem Arbeitsraum und
- Fig. 4: einen Ausschnitt des Arbeitsraums nach Figur 3.

### Beschreibung des Ausführungsbeispiels

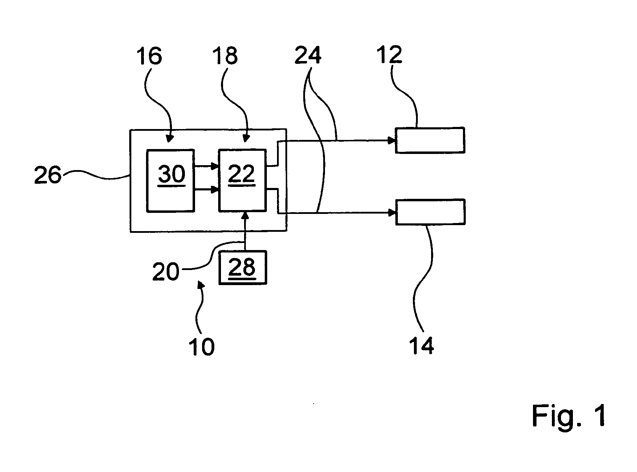

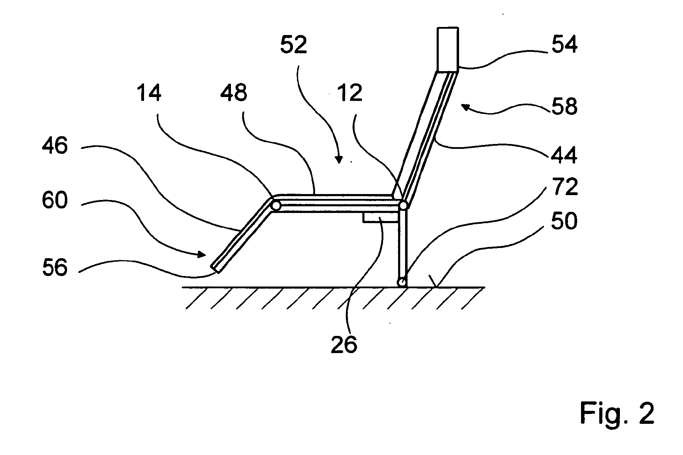

Figur 1 zeigt eine schematische Ansicht einer Sitzvorrichtung mit einer Kontrolleinheit 10, die zwei Sitzaktuatoren 12, 14 ansteuert. Die Sitzaktuatoren 12, 14 sind als Servoelemente ausgebildet, die jeweils ein Sitzteil 44, 46 relativ zu einem Sitzboden 48 und zu einer Aufständerebene 50 eines Fluggastsitzes 52 bewegen (Figur 2).

Die Sitzaktuatoren 12, 14 arbeiten dabei elektrisch und führen eine Rotationsbewegung der Sitzteile 44, 46 aus. Es ist in diesem Zusammenhang jedoch auch denkbar, dass ein Fachmann pneumatische Sitzaktuatoren einsetzt und/oder die Sitzaktuatoren eine Linearbewegung ausführen. Die Kontrolleinheit 10 wird von einer externen Energiequelle (nicht dargestellt) mit einer elektrischen Spannung versorgt.

Die Kontrolleinheit 10 weist eine Datenspeichereinheit 16 und eine Recheneinheit 18 auf. Die Datenspeichereinheit 16 speichert unabhängig von einer Stromversorgung Informationen in einem Datenspeicher 30. Die Recheneinheit 18 weist einen Informationseingang 20, eine Informationsverarbeitung 22 und eine Informationsausgabe 24 auf.

Ferner weist die Recheneinheit 18 einen Prozessor, Ein- und Ausgabemittel, weitere elektrische Bauteile, ein Betriebsprogramm, Regelroutinen, Steuerroutinen und Berechnungsroutinen auf (nicht dargestellt). Die Bauteile der Recheneinheit 18 sind auf einer gemeinsamen Platine (nicht dargestellt) und in einem gemeinsamen Gehäuse 26 angeordnet. Das Gehäuse 26 ist am Sitzboden 48 angeordnet. Es ist in diesem Zusammenhang jedoch auch denkbar, das Gehäuse 26 außerhalb eines Fluggastsitzes anzuordnen.

Am Informationseingang 20 ist eine Sensoreinheit 28 der Kontrolleinheit 10 angeschlossen. Die Sensoreinheit 28 ist von einer Lichtschranke gebildet. Es sind in diesem Zusammenhang auch andere, dem Fachmann als sinnvoll erscheinende Sensorelemente denkbar, wie zum Beispiel Bewegungssensoren, Temperatursensoren, Beschleunigungssensoren, Schallsensoren, Drucksensoren und/oder Feuchtigkeitssensoren.

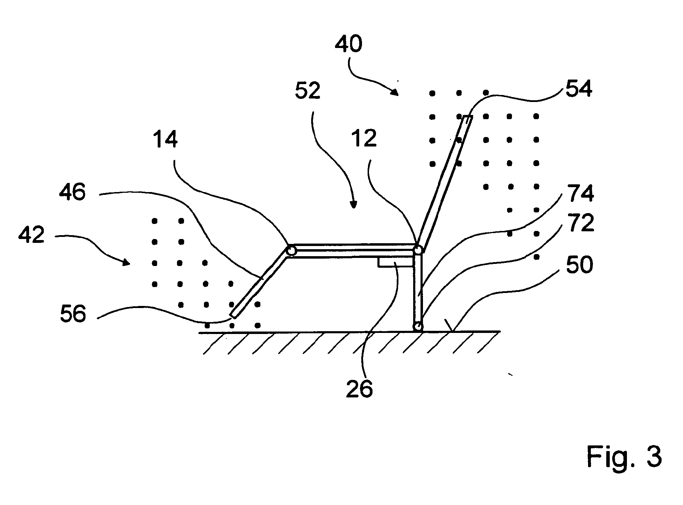

Im Datenspeicher sind diskrete Raumpunkte 32, 34, 36, 38 gespeichert, die einen Arbeitsraum 40 vollständig definieren (Figur 3). Die diskreten Raumpunkte 32, 34, 36, 38 sind an unterschiedlichen Orten im Raum angeordnet. Aus Gründen der Übersichtlichkeit sind nur vier der Raumpunkte mit Bezugszeichen versehen. Ferner ist der Arbeitsraum zweidimensional dargestellt. Der Arbeitsraum ist jedoch nicht auf einen zweidimensionalen Raum beschränkt, sondern kann für jede beliebige dreidimensionale Bewegung eines Sitzteils verwendet werden.

Figur 2 zeigt einen Fluggastsitz mit einer erfindungsgemäßen Sitzvorrichtung. Innerhalb des Arbeitsraums 40 ist das Sitzteil 46 frei bewegbar. Das Sitzteil 44 ist als Rückenlehne, das Sitzteil 46 als Beinauflage ausgebildet. In einem weiteren Arbeitsraum 42 ist das Sitzteil 44 frei bewegbar.

Beide Sitzteile 44, 46 sind schwenkbar am Sitzboden 48 gelagert und können von den Sitzaktuatoren 12, 14, die innerhalb des Sitzbodens 48 angeordnet sind, geschwenkt werden. Jedes Sitzteil 44, 46 weist einen Arbeitspunkt 54, 56 auf, der zum jeweiligen Sitzteil 44, 46 ortsfest angeordnet ist. Die Recheneinheit 18 bestimmt die Positionen der Arbeitspunkte 54, 56 anhand der Geometrie und der Stellungen der Sitzaktuatoren 12, 14. Die Arbeitspunkte 54, 56 sind in Endbereichen 58, 60 der Sitzteile 44, 46 angeordnet.

Ein weiterer Sitzaktuator 72 ist an der Aufständerebene 50 angeordnet. Der Sitzaktuator 72 bewegt ein Sitzteil 74, an dem der Sitzboden 48 befestigt ist. Der Sitzboden 48, sowie die anderen Sitzaktuatoren 12, 14 bewegen sich bei einer Verstellung des Sitzaktuators 72 auf Kreisbahnen um den Sitzaktuator 72.

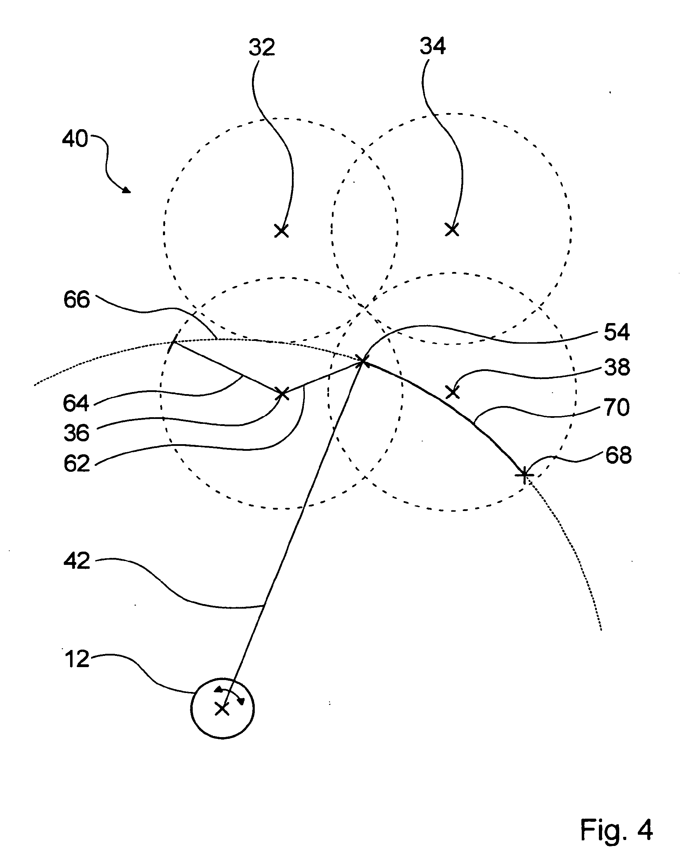

Figur 4 zeigt schematisch einen Ausschnitt des Arbeitsraums 40 mit dem Arbeitspunkt 54 des Sitzteils 44. Der Arbeitsraum 40 wird von den Raumpunkten 32, 34, 36, 38 vollständig definiert. Dazu weist der Arbeitspunkt 54 zu einem nächstliegenden Raumpunkt 32 stets einen Abstand 62 auf, der kleiner ist als ein definierter Maximalabstand 64. Für jeden Raumpunkt 32, 34, 36, 38 ist ein individueller Maximalabstand gespeichert. Im gezeigten Ausführungsbeispiel sind alle Maximalabstände gleich groß.

Der Maximalabstand 64 definiert einen kreisförmigen Toleranzbereich um jeden Raumpunkt 32, 34, 36, 38. Der Maximalabstand 64 zu einem Raumpunkt 32, 34, 36, 38 ist kleiner als ein Abstand des Raumpunkts 32, 34, 36, 38 zu einem nächstliegenden, benachbarten Raumpunkt 32, 34, 36, 38.

Wie Figur 4 weiter zeigt, ist der Arbeitspunkt 54 über das Sitzteil 44 mit dem Sitzaktuator 12 verbunden. Eine Rotation des Sitzaktuators 12 bewirkt eine Bewegung des Arbeitspunkts 54 auf einer Kreisbahn 66. Die Recheneinheit 18 bestimmt die Position des Arbeitspunkts 54 anhand der Länge des Sitzteils 44 und eines momentanen Drehwinkels des Sitzaktuators 12.

In der Datenspeichereinheit 16 der Kontrolleinheit 10 ist eine Betriebsposition 68 des Sitzaktuators 12 gespeichert, die zur Einnahme einer Ruheposition angesteuert wird. Zur Ansteuerung des Sitzaktuators 12 berechnet die Kontrolleinheit 10 einen Verfahrweg 70 des Arbeitspunkts 54 zur Betriebsposition 68.

Im gezeigten Ausführungsbeispiel ist der Verfahrweg 70 durch die Kreisbahn 66 des Sitzaktuators 12 und die Stellung des Sitzaktuators 72 vorgegeben. Dadurch entsteht eine Kette von Sitzaktuatoren 12, 14, 72, die in Wechselwirkung zueinander stehen. Der Verfahrweg 70 kann somit frei gewählt werden. Wird nur der Sitzaktuator 72 verstellt, bewegen sich die Arbeitspunkte 54, 56 auf einer Kreisbahn um den Sitzaktuator 72. Um ein Verlassen des Arbeitsraums 40, 42 zu vermeiden, steuert die Kontrolleinheit 10 nach Bedarf den zum jeweiligen Arbeitsraum 40, 42 zugehörigen Sitzaktuator 12, 14 an. Der Sitzaktuator 12, 14 führt daraufhin eine Ausweichbewegung aus. Zur Vereinfachung bewegt sich der Sitzaktuator 72 im gezeigten Ausführungsbeispiel nicht. Der Verfahrweg 70 verläuft daher entlang der Kreisbahn 66 und weist keine Knicke oder Ecken auf.

Die Kontrolleinheit 10 berechnet zyklisch den Verfahrweg 70 in Abhängigkeit von einer Abstandsbestimmung zu einem nächstliegenden Raumpunkt 36, 38. Ergibt die Abstandsbestimmung einen Abstand 62, der kleiner ist als der Maximalabstand 64, befindet sich der Arbeitspunkt 54 innerhalb des Arbeitsraums 40. Die Kontrolleinheit 10 berechnet den Verfahrweg 70 in einer Vorsimulation. Dabei werden mögliche Verfahrwege auf Kollisionsgefahren hin überprüft und derart angepasst, dass Kollisionen des Sitzteils 44 vermieden werden.

Ein Anfahren und Abbremsen der Sitzaktuatoren 12, 14 erfolgt gemäß einer Verfahrkurve, die von der Recheneinheit 18 der Kontrolleinheit 10 berechnet wird. Zur Berechnung der Verfahrkurve ist für jeden Raumpunkt 32, 34, 36, 38 ein Geschwindigkeitsparameter gespeichert, der festlegt, mit welcher Geschwindigkeit ein Sitzteil 44 den Raumpunkt 32, 34, 36, 38 passieren soll.

Die Verfahrkurve beschreibt ein Beschleunigungsverhalten bzw. Geschwindigkeitswerte des Arbeitspunkts 54, die durch eine gezielte Rotationsgeschwindigkeit der Sitzaktuatoren 12, 14 erreicht werden. Bei einer Verstellung beider Sitzaktuatoren 12, 14 berechnet die Recheneinheit 18 der Kontrolleinheit 10 für jeden Sitzaktuator 12, 14 eine Verfahrkurve, so dass beide Sitzaktuatoren 12, 14 zeitsynchron anfahren und zeitsynchron abbremsen.

Die Sensoreinheit 28 liefert Informationen über mögliche Gegenstände, die sich innerhalb des Arbeitsraums 40 befinden. Zeigt die Sensoreinheit 28 einen Gegenstand an, berechnet die Recheneinheit 18 den Verfahrweg 70 entsprechend neu und kann somit eine mögliche Kollision der Sitzteile 44, 46 mit dem Gegenstand vermeiden. Dadurch verändert die Sensoreinheit 28 den Verfahrweg 70 in Abhängigkeit von einem störenden Gegenstand.

### Bezugszeichen

- 10: Kontrolleinheit
- 12: Sitzaktuator
- 14: Sitzaktuator
- 16: Datenspeichereinheit
- 18: Recheneinheit
- 20: Informationseingang
- 22: Informationsverarbeitung
- 24: Informationsausgabe
- 26: Gehäuse
- 28: Sensoreinheit
- 30: Datenspeicher
- 32: Raumpunkt
- 34: Raumpunkt
- 36: Raumpunkt
- 38: Raumpunkt
- 40: Arbeitsraum
- 42: Arbeitsraum
- 44: Sitzteil
- 46: Sitzteil
- 48: Sitzboden
- 50: Aufständerebene
- 52: Fluggastsitz
- 54: Arbeitspunkt

- 56: Arbeitspunkt
- 58: Endbereich
- 60: Endbereich
- 62: Abstand
- 64: Maximalabstand
- 66: Kreisbahn
- 68: Betriebsposition
- 70: Verfahrweg
- 72: Sitzaktuator
- 74: Sitzteil

## Patentansprüche

1. Sitzvorrichtung, insbesondere Fluggastsitzvorrichtung, mit zumindest einer Kontrolleinheit (10), die zur Bewegung eines Sitzteils (44, 46) in einem Arbeitsraum (40, 42) durch Ansteuerung zumindest eines Sitzaktuators (12, 14) vorgesehen ist, **dadurch gekennzeichnet, dass** in der Kontrolleinheit (10) diskrete Raumpunkte (32, 34, 36, 38) gespeichert sind, die den Arbeitsraum (40) vollständig definieren, in dem sich ein über das Sitzteil (44, 46) mit dem Sitzaktuator (12, 14) verbundener Arbeitspunkt (54, 56) befindet, so dass der Arbeitspunkt (54, 56) zu einem nächstliegenden Raumpunkt (32, 34, 36, 38) stets einen Abstand (62) aufweist, der kleiner ist als ein definierter Maximalabstand (64), und wobei dieser Maximalabstand (64) kleiner als ein Abstand des Raumpunkts (32, 34, 36, 38) zu einem nächstliegenden, benachbarten Raumpunkt (32, 34, 36, 38) ist.

2. Sitzvorrichtung nach Anspruch 1, **dadurch gekennzeichnet, dass** die Kontrolleinheit (10) dazu vorgesehen ist, einen Arbeitspunkt (54, 56) des zumindest einen Sitzaktuators (12, 14) zu berechnen.

3. Sitzvorrichtung nach einem der vorhergehenden Ansprüche, **dadurch gekennzeichnet, dass** die Kontrolleinheit (10) dazu vorgesehen ist, zumindest eine Betriebsposition (68) des zumindest einen Sitzaktuators (12, 14) zu speichern.

4. Sitzvorrichtung nach einem der vorhergehenden Ansprüche, **dadurch gekennzeichnet, dass** die Kontrolleinheit (10) dazu vorgesehen ist, bei einer Ansteuerung des zumindest einen Sitzaktuators (12, 14) einen Verfahrweg (70) zu berechnen.

5. Sitzvorrichtung nach Anspruch 4, **dadurch gekennzeichnet, dass** die Kontrolleinheit (10) dazu vorgesehen ist, den Verfahrweg (70) in Abhängigkeit von zumindest einer Abstandsbestimmung zu zumindest einem nächstliegenden Raumpunkt (32, 34, 36, 38) zu berechnen.

6. Sitzvorrichtung zumindest nach Anspruch 4, **dadurch gekennzeichnet, dass** die Kontrolleinheit (10) dazu vorgesehen ist, den Verfahrweg (70) in einer Vorsimulation zu berechnen.

7. Sitzvorrichtung nach einem der vorhergehenden Ansprüche, **dadurch gekennzeichnet, dass** die Kontrolleinheit (10) dazu vorgesehen ist, den zumindest einen Sitzaktuator (14) bei einer Gesamtbewegung zeitsynchron mit zumindest einem weiteren Sitzaktuator (12) anzusteuern.

8. Sitzvorrichtung nach einem der vorhergehenden Ansprüche, **dadurch gekennzeichnet, dass** die Kontrolleinheit (10) dazu vorgesehen ist, für den zumindest einen Sitzaktuator (12, 14) eine Verfahrkurve zu berechnen.

9. Sitzvorrichtung zumindest nach Anspruch 4, **dadurch gekennzeichnet, dass** die Kontrolleinheit (10) eine Sensoreinheit (28) aufweist, die dazu vorgesehen ist, den Verfahrweg (70) zu verändern.

10. System mit einer Sitzvorrichtung nach einem der vorhergehenden Ansprüche, einem Fluggastsitz und mit zumindest einem Sitzaktuator (12, 14).

## Claims

1. Seat device, in particular aircraft passenger seat device, having at least one control unit (10) which is provided for moving a seat part (44, 46) in a working space (40, 42) by actuating at least one seat actuator (12, 14), **characterized in that** discrete spatial points (32, 34, 36, 38) are stored in the control unit (10), which spatial points (32, 34, 36, 38) completely define the working space (40) in which an operating point (54, 56) which is connected to the seat actuator (12, 14) via the seat part (44, 46) is located, such that the distance (62) between the operating point (54, 56) and a closest spatial point (32, 34, 36, 38) is always shorter than a defined maximum distance (64), and wherein this maximum distance (64) is shorter than a distance between the spatial point (32, 34, 36, 38) and a closest adjacent spatial point (32, 34, 36, 38).

2. Seat device according to Claim 1, **characterized in that** the control unit (10) is provided for calculating an operating point (54, 56) of the at least one seat actuator (12, 14).

3. Seat device according to one of the preceding claims, **characterized in that** the control unit (10) is provided for storing at least one operating position (68) of the at least one seat actuator (12, 14).

4. Seat device according to one of the preceding claims, **characterized in that** the control unit (10) is provided to calculate a travel length (70) in the event of actuation of the at least one seat actuator (12, 14).

5. Seat device according to Claim 4, **characterized in that** the control unit (10) is provided to calculate the travel length (70) as a function of at least one determination of a distance to the closest spatial point (32, 34, 36, 38) in at least one case.

6. Seat device at least according to Claim 4, **characterized in that** the control unit (10) is provided for calculating the travel length (70) in a pre-simulation.

7. Seat device according to one of the preceding claims, **characterized in that** the control unit (10) is provided for actuating the at least one seat actuator (14) in synchronism with at least one further seat actuator (12) during an overall movement.

8. Seat device according to one of the preceding claims, **characterized in that** the control unit (10) is provided for calculating a travel curve for the at least one seat actuator (12, 14).

9. Seat device at least according to Claim 4, **characterized in that** the control unit (10) has a sensor unit (28) which is provided for changing the travel length (70).

10. System having a seat device according to one of the preceding claims, an aircraft seat and at least one seat actuator (12, 14).

## Revendications

1. Dispositif de siège, en particulier dispositif de siège pour un passager d'avion, comprenant au moins une unité de contrôle (10) qui est prévue pour déplacer une partie de siège (44, 46) dans un espace de travail (40, 42) par commande d'au moins un actionneur de siège (12, 14), **caractérisé en ce que** des points discrets spatiaux (32, 34, 36, 38) sont stockés dans l'unité de contrôle (10), lesquels définissent complètement l'espace de travail (40) dans lequel se trouve un point de travail (54, 56) connecté par le biais de la partie de siège (44, 46) à l'actionneur de siège (12, 14) de telle sorte que le point de travail (54, 56) présente toujours une distance (62) à un point spatial le plus proche (32, 34, 36, 38), laquelle distance (62) est inférieure à une distance maximale définie (64), et cette distance maximale (64) étant inférieure à une distance du point spatial (32, 34, 36, 38) à un point spatial adjacent le plus proche (32, 34, 36, 38).

2. Dispositif de siège selon la revendication 1, **caractérisé en ce que** l'unité de contrôle (10) est prévue pour calculer un point de travail (54, 56) de l'au moins un actionneur de siège (12, 14).

3. Dispositif de siège selon l'une quelconque des revendications précédentes, **caractérisé en ce que** l'unité de contrôle (10) est prévue pour stocker au moins une position fonctionnelle (68) de l'au moins un actionneur de siège (12, 14).

4. Dispositif de siège selon l'une quelconque des revendications précédentes, **caractérisé en ce que** l'unité de contrôle (10) est prévue pour calculer une course de déplacement (70) dans le cas d'une commande de l'au moins un actionneur de siège (12, 14).

5. Dispositif de siège selon la revendication 4, **caractérisé en ce que** l'unité de contrôle (10) est prévue pour calculer la course de déplacement (70) en fonction d'au moins une détermination de distance à l'au moins un point spatial le plus proche (32, 34, 36, 38).

6. Dispositif de siège selon au moins la revendication 4, **caractérisé en ce que** l'unité de contrôle (10) est prévue pour calculer la course de déplacement (70) dans une pre-simulation.

7. Dispositif de siège selon l'une quelconque des revendications précédentes, **caractérisé en ce que** l'unité de contrôle (10) est prévue pour commander l'au moins un actionneur de siège (14) dans le cas d'un déplacement complet de manière synchronisée dans le temps avec au moins un autre actionneur de siège (12).

8. Dispositif de siège selon l'une quelconque des revendications précédentes, **caractérisé en ce que** l'unité de contrôle (10) est prévue pour calculer une courbe de déplacement pour l'au moins un actionneur de siège (12, 14).

9. Dispositif de siège selon la revendication 4, **caractérisé en ce que** l'unité de contrôle (10) présente une unité de capteur (28) qui est prévue pour modifier la course de déplacement (70).

10. Système comprenant un dispositif de siège selon l'une quelconque des revendications précédentes, un siège de passager d'avion et au moins un actionneur de siège (12, 14).
